# EUROPEAN PATENT SPECIFICATION

(11) **EP 4 071 005 B1**
(45) Date of publication and mention of the grant of the patent: **13.12.2023**
(21) Application number: 21167271.2
(22) Date of filing: 07.04.2021
(51) Int. Cl.: B60R 22/18, B60R 22/24, B60R 22/26

(54) **SEAT BELT ASSEMBLY**
SITZGURTANORDNUNG
ENSEMBLE E CEINTURE DE SÉCURITÉ

(43) Date of publication of application: 12.10.2022
(73) Proprietor: Ford Global Technologies, LLC, Dearborn, MI 48126 (US)
(72) Inventor: TCHEPIKOV, Igor, 22 Bayside Drive, Point Cook, Victoria, 3030 (AU); BOONYARANGKAVORN, Nuttaphon, 595 Seymour-Pyalong Rd, Hilldene (AU); DYER, Alan, Melbourne, Victoria (AU); TRENTIN, Christian, U26 70-72 Coghlan St, Niddrie, Victoria, 3042 (AU); CARROLL, Brett, 4 Menzies Crescent, Ringwood North, Victoria, 3134 (AU)
(74) Representative: Haseltine Lake Kempner LLP

(56) References cited:
- FR-A1- 2 741 849
- GB-A- 2 298 123
- GB-A- 2 314 003
- US-A- 5 647 611
- US-B2- 9 738 248
- US-B2- 10 246 045

## Description

### FIELD

The present disclosure relates to a seat belt assembly for securing an occupant to a vehicle seat.

### BACKGROUND OF THE INVENTION

Seat belt restraint assemblies are currently required for vehicles. During certain vehicle deceleration, i.e., during a vehicle accident, sudden stop, and the like, the seat belts are designed to restrain an occupant to a seat. When restrained by the seat belt, the occupant loads the seat belt. The seat belt in turn transfers the occupant loads to a vehicle structure supporting the seat belt assembly. It is advantageous to transfer the loads experienced by the seat belts to the structural side walls and/or floor of the vehicle.

Vehicle manufacturers and their suppliers along with governmental regulatory bodies impose safety related regulations affecting the design of automobiles and equipment provided on them for occupant protection. For example, vehicles sold or used in the United States must meet certain rules for impact protection and safety. Apart from regulatory bodies, the market specific non-government bodies such as Euro NCAP, set criteria of safe motor vehicle operations and publish safety ratings of product offerings in a set of markets. The criteria evolve and change in line with research of injury causality and market perception of safety, with automotive manufacturers providing new designs and features to achieve desired ratings. There remains a desire for further enhancements in frontal impact protection which may be provided in accordance with this invention through improved restraint of the occupants during a restraint event.
Document US5647611 discloses a vehicle safety belt system of the lap and shoulder type comprising a main belt wound on a retractor, the free end of the belt being securable to the vehicle body work, a slidable tongue fitted to the main belt and a main buckle securable to the vehicle body work into which the tongue is lockingly insertable. The retractor prevents the main belt from being withdrawn when the retractor is subjected to an acceleration or deceleration in excess of a predetermined value. The retractor is mounted adjacent the top of the vehicle seat back. The retractor is prevented from moving forwardly in the event of an accident, but is releasable to allow the seat back, and with it the retractor, to be folded forward when desired.
Document US9738248 discloses a web position and attenuation apparatus including an elastically deformable body having a first end and a second end opposite the first end, one of the first and second ends configured to be affixed to a frame of a movable vehicle, a web coupling member received on the elastically deformable body, the web coupling member movable relative to, and positionable along, the elastically deformable body, the web coupling member defining a web slot, and a flexible web extending through the web slot, the flexible web part of a restraint system to restrain an occupant of a vehicle seat mounted within the vehicle.
Document GB2314003 discloses an arrangement in which seat-belt retractors are mounted near the top of a minibus seat, forward of the back face of the seat's back-rest. The belt is taken round a guide so that the retractor is not subjected to forces to which it is unsuited. Document US10246045 discloses a vehicle including a body. A front seat and a rear seat are each supported by the body. A seat belt buckle is supported by the rear seat. A harness bar is supported by the body and disposed between the front seat and the rear seat. A webbing is attached to the harness bar. A tongue is attached to the webbing. The tongue is engageable with the seat belt buckle.
Document FR2741849 discloses a safety belt fitted to a vehicle seat. A belt, which passes between a lower securing point, fixed to the lower point of the seat back. An upper securing point is fitted with a belt roller behind the upper part of the seat back. The belt passes over the length of the seat back and within this length carries a bolt, which is designed to fit into the buckle, which forms the third point of anchorage. The belt roller is attached to a rigid cross beam, which is fixed behind the upper part of the seat back. The ends of the cross beam are fixed into supports, which are fixed on each side of the seat back, to the structure of the vehicle.

### SUMMARY

According to one aspect of the present disclosure, there is provided a seat belt assembly having the features of claim 1 below. Optional features of the seat belt assembly are set out in the dependent claims.

### BRIEF DESCRIPTION OF THE DRAWINGS

Example embodiments will be more clearly understood from the following brief description taken in conjunction with the accompanying drawings. The accompanying drawings represent non-limiting, example embodiments as described herein.
FIG. 1 is a view of a cab showing the rear wall and the tubular member.
FIG. 2 is a front view of the seats showing the seat back, seat belt and belt guide.
FIG. 3 is a cross-sectional side view of a seat showing the seat back and belt guide.
FIG. 4 is a view of the seat belt assembly with the seats removed.
FIG. 5 is a view with the seats and rear wall removed showing the tubular member attached to the vehicle side walls and the belt guide.
FIG. 6 shows a seat belt guide of a seat belt guiding construction of the invention.
FIG. 7 is a cross-sectional view of seat belt guide connected to the tubular member.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

The disclosed seat belt mechanism will become better understood through review of the following detailed description in conjunction with the figures. The detailed description and figures provide merely examples of the various inventions described herein. Those skilled in the art will understand that the disclosed examples may be varied, modified, and altered without departing from the scope of the inventions described herein. Many variations are contemplated for different applications and design considerations; however, for the sake of brevity, each and every contemplated variation is not individually described in the following detailed description.

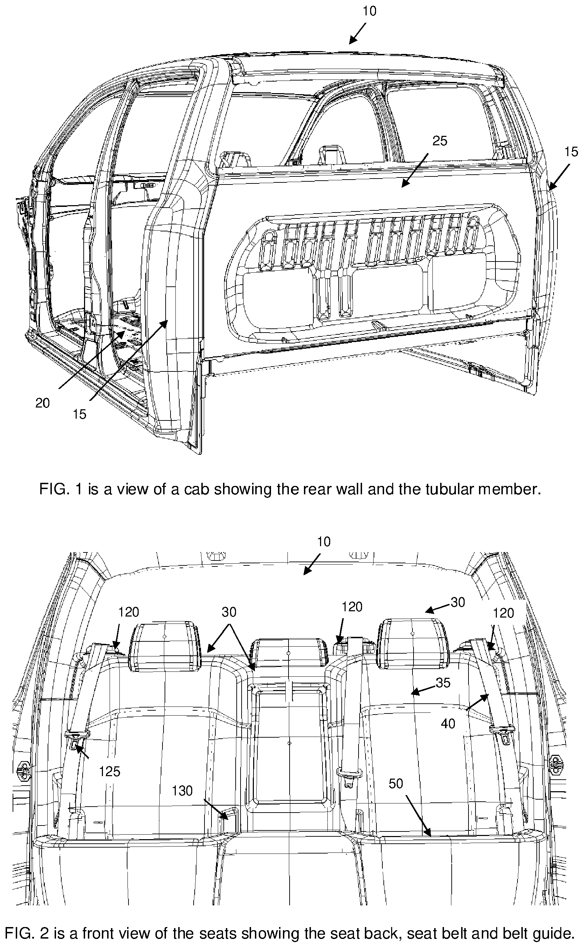

Referring to FIG. 1, FIG. 1 is a perspective view of a vehicle assembly showing a portion of the seat belt mechanism according to one embodiment of the present disclosure. The vehicle assembly is illustrated as a pickup truck type vehicle having an interior passenger cab. As appreciated, the subject invention as subsequently described is in no way limited to a particular type of vehicle. The cab 10 of the vehicle includes spaced side walls 15 defining body sides. A floor 20 extends between the body sides and a rear wall 25 extends upwardly from the floor between the side walls 15. The cab 10 also includes a front dash, passenger doors, roof, windows and other known components to complete the enclosed pickup truck cab some of which are not shown in the FIG. 1.

FIG. 2 is a front view of the seats 30 showing the seat back 35, seat belt 40 and belt guide 120. The seats 30 are generally supported by the floor. Each seat includes a seat back 35 and a seat cushion 50, as is well known in the art. The seat is illustrated as a bench type seat mounted to a rear of the cab 10. The seat may be the primary seat for the vehicle or may be a second-row seat such as typically provided in super cab pickup trucks. The seat back may be pivotal such that the seat back can pivot to a folded position overlaying the seat cushion. In addition, the seat may be able to tumble forward to provide additional storage space or access behind the seat 16. Hence, the seat back and seat cushion may separately pivot to various storage positions as is known in the art. As appreciated, the seat may be of any suitable design, shape, size or configuration without deviating from the scope of the subject invention.

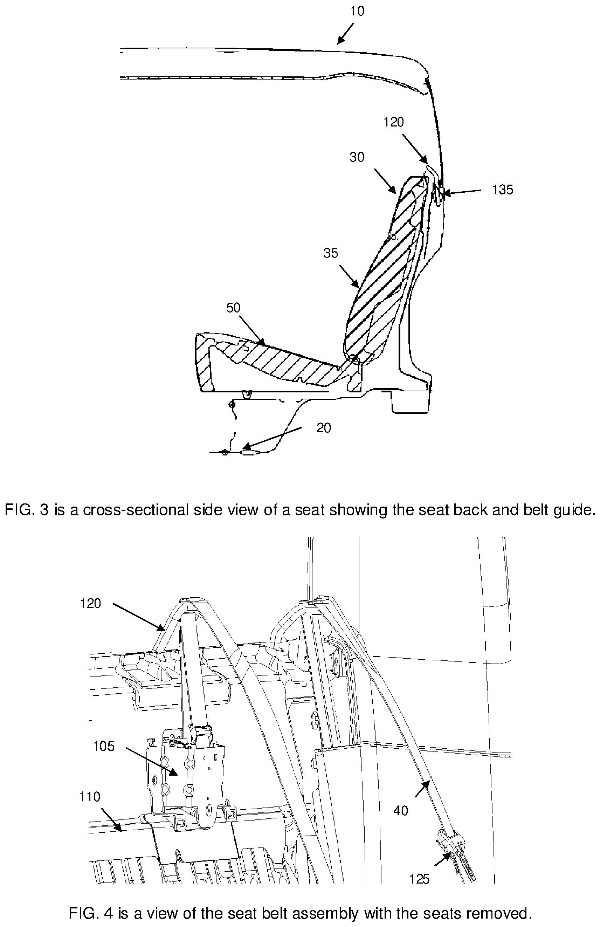

Referring to FIG. 2, in this embodiment, explanation is given of a wider seat back of a rear seat for three people. A seat belt assembly is provided for each seat 30. Each seat belt assembly includes a retractor 105 (refer FIG.4) mounted on the seat back frame 110 (refer FIG. 4) behind the seat back 35 and a seat belt 40 is provided for each seat 30, and this seat belt 35 is configured so as to be capable of being pulled upward through a seat belt guide 120 provided adjacent to the upper part of the seat back frame 110. The tongue plate 125 is a male locking tab which selectively connects with a female buckle or latch 130, to form a three-point belt configuration, as is well known. The tongue plate 125 and buckle 130 secure the shoulder belt to the seat 30, such that the belt 40 may restrain an occupant to the seat 30. The belt webbing 115 is of a known webbing construction which has a high strength to weight ratio.

For the sake of illustration, in some figures, the seat belt assembly of the subject invention is illustrated using one of the seats having a seat belt which is used to restrain a seated occupant to the seat.

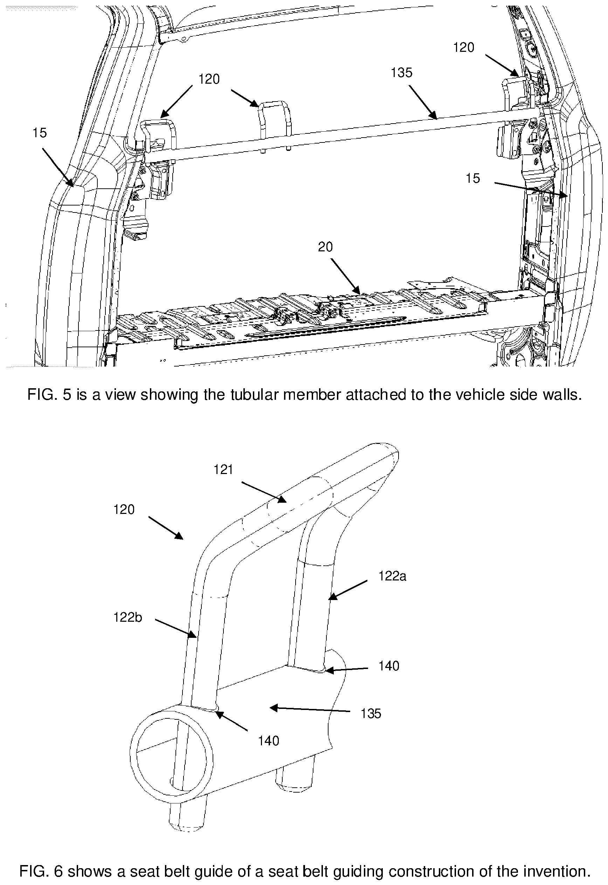

Referring to FIG. 3, FIG. 3 is a cross-sectional side view of a seat 30 showing the seat back 35, seat cushion 50 and belt guide 120. The seat back 35 is positioned adjacent to the rear wall 25 and the retractor 105 is fixed to the upper portion of the seat back frame 110. The tubular member 135 is present behind the seat back 35 and has holes 140 (refer FIG. 6) through which the belt guides 120 are inserted and rigidly fixed using any suitable means. The belt guides 120 are located above the upper portion of the seat back frame 110 laterally offset along the vehicle width direction from the center of the seat back 35. The upper transverse portion 121 of the belt guide is slightly bent forward compared to the side portions to receive the seat belt 115 from the retractor. The seat belt webbing 115 goes around the transverse portion 121 of the belt guide towards the anchor (not shown). The anchor is preferably attached to a structural frame of the vehicle such as the floor or the sidewall.

Referring to FIG. 4, in the seat back 35, a seat back frame 110 is provided substantially over the whole of the seat back 35. The seat back frame 110 is fitted with a retractor 105 for winding the seat belt webbing 115, an upper portion of the seat back frame 110 is formed into a rectangular shape in cross section, and the like. The upper portion of the seat back frame 110 extends in the width direction of the seat back 35. The seat belt retractor 105 is positioned in the particular portion in the width direction of the seat back frame 110 below the position of the seat belt guide 120, as shown in FIG. 4. The seat belt retractor 105 is attached to the seat back 35 by bolts or similar fasteners. Alternatively, the retractor 105 may be mounted to a portion of the seat or any other suitable structural member. The seat belt retractor 105 is of a conventional design and includes a seat belt wound thereabout. In particular, the seat belt 40 is a shoulder belt which extends from the retractor towards the belt guide.

Referring to FIGS. 4 and 5, the tubular member 135 on the rear wall 25 is provided for transferring the pulling forces from the seat belt webbing 115 to the side walls 15 of the vehicle. Specifically, the belt guide 120 is loaded by the pulling forces from the seat belt 40 which is transferred to the tubular member 135 which in turn transfers the loads into the side walls of the vehicle 15. During normal operating conditions, there are only minimal stresses imparted on belt guide 120 and tubular member 135 do not experience any significant bending forces. Accordingly, the tubular member 135 do not experience any transferred forces. Normal operating stresses on the tubular member 135 are created by pulling forces on the seat belt 40 from a seated occupant. For example, these forces may occur when the occupant is unwinding the shoulder belt and/or during normal use of the shoulder belt.

However, under certain vehicle deceleration conditions, such as in a vehicle collision or sudden stop, the stresses imparted on the belt guide 120 can become significant. These stresses are created when a large pulling force is experienced by the seat belt 40 due to sudden movement of the occupant. More specifically, when the vehicle experiences a deceleration exceeding a predetermined threshold, the retractor 105 locks the seat belt 40 in the given position. The pulling force of the seat 40 belt which restrains the occupant in the seat is transferred to the tubular member 105 via the belt guide 120. The tubular member 105 in turn transfers these pulling loads to the side walls 15. Specifically, the pulling forces build up in the seat belt 40 and most of the forces or stresses from the seat belt 40 are transferred through the tubular member to the side walls of the vehicle and to the anchor. Hence, the seat belt loads from the occupant can be efficiently transferred to the vehicle structural frame. The tubular member 135 may be hollow or solid, circular or any other cross section and may be made of any suitable material such as steel, aluminum alloy, titanium, metal alloys, metal ceramic, fibre composition, plastics or any combination of materials.

Referring to FIG. 6, the belt guide is made up of two side portions 122a and 122b extending vertically, which are formed by rod-shaped members having a circular cross section, and a horizontal transverse portion 121 connecting the upper end portions of the two side end portions to each other. That is to say, the belt guide 120 is formed integrally by bending a rod-shaped member into a substantially U shaped staple and is disposed so that the opening of the U shape faces downward. The lower ends of the two side portions 122a and 122b are fixed to corresponding holes 140 in the tubular member 135 by welding, adhesive bonding or any other suitable means. The horizontal transverse portion of the belt guide 121 is located above the top surface of the upper portion of the seat back frame 110 and is installed substantially in parallel with the top surface of the upper portion of the seat back frame. The outer peripheral surface of the horizontal transverse portion of the belt guide 121 forms a gentle circumferential surface so that the seat belt can slide on the periphery of the surface smoothly. The inside width i.e. distance between the opposed side portions of the belt guide in the vehicle width direction is approximately equal to or slightly larger than the width of the seat belt webbing. Also, the inside width of the belt guide in the vehicle width direction is a width such that the seat belt webbing can pass through, but a tongue plate of the seat belt cannot pass through. Under normal conditions when the belt is pulled over the belt guide, the length of the seat belt can be regulated. The horizontal transverse portion of the belt guide is for guiding the flat surface of the seat belt webbing and the side portions of the belt guide are for guiding the sides of the seat belt webbing.

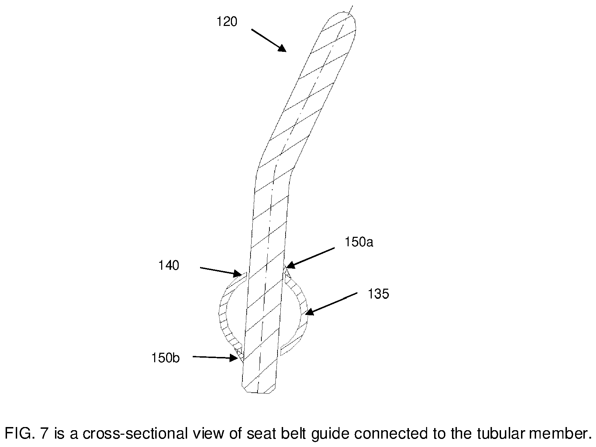

Referring to FIG. 7, FIG.7 is a cross-sectional view of seat belt guide 120 connected to the tubular member 135. In this embodiment, the cross section of the belt guide 120 rod member is circular but it can be of any other suitable geometric configuration. In this embodiment, the cross section of the tubular member 135 is circular, but it can also be of any other suitable geometric configuration. In this embodiment, the cross section of the tubular member 135 can be constant throughout the length of the tubular member but it can be variable along the length in other configurations. The side portions of the belt guide member 122a and 122b are inserted through the holes 140 in the tubular member 135 and are rigidly fixed using any suitable means such as welding, bolting, adhesive bonding, riveting, soldering, compression fit. In this embodiment, the side portions 122a and 122b are welded to the tubular member 135 at two locations 150a and 150b to form a rigid connection.

The following claims particularly point out certain combinations and subcombinations regarded as novel and nonobvious. These claims may refer to "an" element or "a first" element. Such claims should be understood to include incorporation of one or more such elements, neither requiring nor excluding two or more such elements.

## Claims

1. A seat belt assembly for a vehicle, the vehicle having a floor (20), spaced side walls (15) extending from the floor, a seat (30) supported by the floor, wherein said seat belt assembly comprises:
a rear wall (25) configured to interconnect the side walls (15);
a seat belt retractor (105) for attachment to a seat back frame (110) of the seat (30);
an anchor (145) configured to be attached to the vehicle body;
a seat belt guide (120) configured to be disposed adjacent to an upper portion of the seat back frame (110) for guiding a seat belt webbing (115) extending from the seat belt retractor (105) to the anchor (145) wherein said seat belt guide (120) is rigidly fixed to a tubular member (135) extending along the length of rear wall (25) and wherein said tubular member (135) is rigidly attached to the side walls (15) at its ends, wherein the tubular member (135) has mounting holes (140) configured to receive two side portions (122a and 122b) of the belt guide (120), wherein the two side portions (122a and 122b) of the belt guide (120) are inserted into the mounting holes (140) in the tubular member (135) with the side end portions facing downward and rigidly attached to the tubular member (135) by at least one of a welding, brazing, adhesive bonding, riveting, soldering and compression fitting, wherein the seat belt guide (120) is a rod-shaped member formed substantially into a U-shape defined by the two side portions (122a and 122b) and a transverse portion (121) therebetween, wherein the transverse portion (121) comprises the belt guide portion and wherein the two side portions (122a and 122b) are rigidly fixed to the tubular member (135), and wherein said seat belt guide (120) includes a roller rotatably supported by said rod shaped member with said seat belt webbing (115) being movably supported by the roller.

2. The seatbelt assembly of claim 1 further comprising the seat back frame (110), wherein the seat belt retractor (105) is disposed in the seat back frame.

3. A seatbelt assembly as claimed in any of the preceding claims, wherein the tubular member (135) is at least one of a hollow tube or a solid tube.

4. A seatbelt assembly as claimed in any of the preceding claims, wherein the transverse portion (121) of the U-shaped belt guide has substantially the same width as the seat belt webbing (115).

5. A seatbelt assembly as claimed in any of the preceding claims, wherein the upper transverse portion (121) of the seat belt guide (120) is bent forward towards the seat back (35) compared to the lower side portions (122a and 122b).

6. A seatbelt assembly as claimed in any of the preceding claims, wherein the inside width of the belt guide (120) in the vehicle width direction is larger than the width of the seat belt webbing (115).

## Patentansprüche

1. Sitzgurtanordnung für ein Fahrzeug, wobei das Fahrzeug einen Boden (20), beabstandete Seitenwände (15), die sich von dem Boden erstrecken, einen Sitz (30), der durch den Boden getragen wird, aufweist, wobei die Sitzgurtanordnung Folgendes umfasst:
eine Rückwand (25), die dazu konfiguriert ist, die Seitenwände (15) miteinander zu verbinden;
einen Sitzgurtaufroller (105) zur Befestigung an einem Rückenlehnenrahmen (110) des Sitzes (30);
eine Verankerung (145), die dazu konfiguriert ist, an der Fahrzeugkarosserie befestigt zu sein;
eine Sitzgurtführung (120), die dazu konfiguriert ist, benachbart zu einem oberen Abschnitt des Rückenlehnenrahmens (110) angeordnet zu sein, um ein Sitzgurtband (115) zu führen, das sich von dem Sitzgurtaufroller (105) zu der Verankerung (145) erstreckt, wobei die Sitzgurtführung (120) starr an einem rohrförmigen Element (135) fixiert ist, das sich entlang der Länge der Rückwand (25) erstreckt, und wobei das rohrförmige Element (135) an seinen Enden starr an den Seitenwänden (15) befestigt ist, wobei das rohrförmige Element (135) Montagelöcher (140) aufweist, die dazu konfiguriert sind, zwei Seitenabschnitte (122a und 122b) der Gurtführung (120) aufzunehmen, wobei die zwei Seitenabschnitte (122a und 122b) der Gurtführung (120) in die Montagelöcher (140) in dem rohrförmigen Element (135) mit den Seitenendabschnitten nach unten gerichtet eingesetzt und durch mindestens eines von einer Schweiß-, Hartlöt-, Klebe-, Niet-, Löt- und Druckpassung starr an dem rohrförmigen Element (135) befestigt sind, wobei die Sitzgurtführung (120) ein stabförmiges Element ist, das im Wesentlichen in einer U-Form ausgebildet ist, die durch die zwei Seitenabschnitte (122a und 122b) und einen Querabschnitt (121) dazwischen definiert ist, wobei der Querabschnitt (121) den Gurtführungsabschnitt umfasst und wobei die zwei Seitenabschnitte (122a und 122b) starr an dem rohrförmigen Element (135) fixiert sind, und wobei die Sitzgurtführung (120) eine Rolle umfasst, die durch das stabförmige Element drehbar gelagert ist, wobei das Sitzgurtband (115) durch die Rolle beweglich gelagert ist.

2. Sitzgurtanordnung nach Anspruch 1, ferner umfassend den Rückenlehnenrahmen (110), wobei der Sitzgurtaufroller (105) in dem Rückenlehnenrahmen angeordnet ist.

3. Sitzgurtanordnung nach einem der vorhergehenden Ansprüche, wobei das rohrförmige Element (135) mindestens eines von einem hohlen Rohr oder einem massiven Rohr ist.

4. Sitzgurtanordnung nach einem der vorhergehenden Ansprüche, wobei der Querabschnitt (121) der U-förmigen Gurtführung im Wesentlichen die gleiche Breite wie das Sitzgurtband (115) aufweist.

5. Sitzgurtanordnung nach einem der vorhergehenden Ansprüche, wobei der obere Querabschnitt (121) der Sitzgurtführung (120) verglichen mit den unteren Seitenabschnitten (122a und 122b) in Richtung der Rückenlehne (35) nach vorne gebogen ist.

6. Sitzgurtanordnung nach einem der vorhergehenden Ansprüche, wobei die Innenbreite der Gurtführung (120) in der Fahrzeugbreitenrichtung größer als die Breite des Sitzgurtbandes (115) ist.

## Revendications

1. Ensemble ceinture de sécurité pour un véhicule, le véhicule ayant un plancher (20), des parois latérales espacées (15) s'étendant à partir du plancher, un siège (30) supporté par le plancher, dans lequel ledit ensemble ceinture de sécurité comprend :
une paroi arrière (25) configurée pour interconnecter les parois latérales (15) ;
un rétracteur (105) de ceinture de sécurité destiné à être fixé à un cadre (110) de dossier du siège (30) ;
une ancre (145) configurée pour être fixée à la carrosserie du véhicule ;
un guide de ceinture de sécurité (120) configuré pour être disposé de manière adjacente à une partie supérieure du cadre de dossier de siège (110) pour guider une sangle de ceinture de sécurité (115) s'étendant depuis l'enrouleur de ceinture de sécurité (105) jusqu'à l'ancrage (145), dans lequel ledit guide de ceinture de sécurité (120) est fixé de manière rigide à un élément tubulaire (135) s'étendant le long de la paroi arrière (25) et dans lequel ledit élément tubulaire (135) est fixé de manière rigide aux parois latérales (15) à ses extrémités, dans lequel l'élément tubulaire (135) a des trous de montage (140) configurés pour recevoir deux parties latérales (122a et 122b) du guide de ceinture (120), dans lequel les deux parties latérales (122a et 122b) du guide de ceinture (120) sont insérées dans les trous de montage (140) dans l'élément tubulaire (135) avec les parties d'extrémité latérales orientées vers le bas et fixées rigidement à l'élément tubulaire (135) par au moins l'un d'un soudage, d'un brasage, d'un collage, d'un rivetage, d'une soudure et d'un raccord de compression, dans lequel le guide de ceinture (120) est un élément en forme de tige formé sensiblement en forme de U défini par les deux parties latérales (122a et 122b) et une partie transversale (121) entre celles-ci, dans lequel la partie transversale (121) comprend la partie de guide de ceinture et dans lequel les deux parties latérales (122a et 122b) sont rigidement fixées à l'élément tubulaire (135), et dans lequel ledit guide de ceinture de sécurité (120) comprend un rouleau supporté de manière rotative par ledit élément en forme de tige, ladite sangle de ceinture de sécurité (115) étant supportée de manière mobile par le rouleau.

2. Ensemble ceinture de sécurité selon la revendication 1, comprenant également le cadre de dossier de siège (110), dans lequel l'enrouleur de ceinture de sécurité (105) est disposé dans le cadre de dossier de siège.

3. Ensemble ceinture de sécurité selon l'une quelconque des revendications précédentes, dans lequel l'élément tubulaire (135) est au moins un tube creux ou un tube solide.

4. Ensemble ceinture de sécurité selon l'une quelconque des revendications précédentes, dans lequel la partie transversale (121) du guide de ceinture en U a sensiblement la même largeur que la sangle de ceinture de sécurité (115).

5. Ensemble ceinture de sécurité selon l'une quelconque des revendications précédentes, dans lequel la partie transversale supérieure (121) du guide de ceinture de sécurité (120) est recourbée vers l'avant en direction du dossier (35) par rapport aux parties latérales inférieures (122a et 122b).

6. Ensemble ceinture de sécurité selon l'une quelconque des revendications précédentes, dans lequel la largeur intérieure du guide de ceinture (120) dans la direction de la largeur du véhicule est supérieure à la largeur de la sangle de ceinture de sécurité (115).
